# EUROPEAN PATENT APPLICATION

(11) **EP 4 550 895 A1**
(43) Date of publication of application: **07.05.2025**
(21) Application number: 23207365.0
(22) Date of filing: 02.11.2023
(51) Int. Cl.: H04W 52/02

(54) **APPARATUS AND METHOD FOR A TERMINAL DEVICE**

(71) Applicant: Nokia Technologies Oy, 02610 Espoo (FI)
(72) Inventor: Sébire, Benoist Pierre, Tokyo, 106-6141 (JP); Malkamäki, Esa Mikael, 02130 Espoo (FI); Koskinen, Henri Markus, 02600 Espoo (FI); Li, Zexian, 02610 Espoo (FI)
(74) Representative: DREISS Patentanwälte PartG mbB

(57) **Abstract**

An apparatus for a terminal device comprising at least one radio processing unit for processing data associated with a radio communication between the terminal device and at least one further device, the apparatus comprising at least one processor, and at least one memory storing instructions that, when executed by the at least one processor, cause the apparatus to: determine first information at least indicating to activate or deactivate the at least one radio processing unit, control an operation of the at least one radio processing unit based on the first information.

## Description

### Field of the Disclosure

Various example embodiments relate to an apparatus for a terminal device. Further example embodiments relate to a method for a terminal device.

Further example embodiments relate to an apparatus for a network device. Further example embodiments relate to a method for a network device.

### Background

Communication systems such as, e.g., wireless communication systems may be used for wireless exchange of information between two or more entities, e.g., comprising one or more terminal device, e.g., user equipment (UE), and one or more network devices such as, e.g., base stations (BSs).

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some example embodiments relate to an apparatus for a terminal device comprising a at least one radio processing unit, RPU, for processing data associated with a radio communication between the terminal device and at least one further device, the apparatus comprising at least one processor, and at least one memory storing instructions that, when executed by the at least one processor, cause the apparatus to: determine first information at least indicating to activate or deactivate the at least one radio processing unit , control an operation of the at least one radio processing unit based on the first information. In some embodiments, this enables to flexibly adjust the processing capabilities of the terminal device, e.g., to a current load situation.

In some example embodiments, the terminal device may comprise one radio processing unit.

In some example embodiments, the terminal device may comprise a plurality of radio processing units, e.g., two or more radio processing units.

In some examples, each of the at least one radio processing unit(s) may comprise a radio link control, RLC, entity.

As an example, in some embodiments, a, for example hardware-based, for example parallel, processing of the data associated with the radio communication between the terminal device and at least one further device is enabled by using one or more radio processing units of the plurality of radio processing units. In some example embodiments, the first information may indicate or characterize, respectively, one or more further aspects related to the at least one radio processing unit, e.g., additionally to indicating to activate or deactivate the at least one radio processing unit.

In some example embodiments, the terminal device may be suitable for use with a wireless, e.g., cellular, communication system. In some embodiments, the terminal device may, for example, be a user equipment (UE) for a wireless communication system.

In some example embodiments, at least one of the terminal device or the wireless communication system may adhere to and/or may be based on some accepted (and/or planned) specification, e.g., standard, such as, e.g., 3G, 4G, 5G, 6G, or some other wireless communication standard.

In some example embodiments, the terminal device may be configured to exchange data with at least one further device, such as, e.g., a network device, e.g., base station, e.g., gNB and/or a further terminal device, e.g., UE.

In some example embodiments, the network device may adhere to and/or may be based on some accepted (and/or planned) specification, e.g., standard, such as, e.g., 3G, 4G, 5G, 6G, or some other wireless communication standard.

In some example embodiments, one or more radio processing units of the terminal device are configured to, e.g., at least temporarily, process data associated with a control plane.

In some example embodiments, one or more radio processing units of the terminal device are configured to, e.g., at least temporarily, process data associated with a user plane.

In some example embodiments, one or more radio processing units of the terminal device are configured to, e.g., at least temporarily, process data associated with the control plane and with the user plane.

In some example embodiments, a first group of one or more radio processing units of the terminal device can be configured to, e.g., at least temporarily, process data associated with the control plane and with the user plane.

In some example embodiments, a second group of one or more radio processing units of the terminal device can be configured to, e.g., at least temporarily, process data associated with the user plane, but, for example, is not configured to process data associated with the control plane.

In some example embodiments, the instructions, when executed by the at least one processor, cause the apparatus to determine the first information locally, e.g., at the terminal device, e.g., without interaction between the terminal device and another entity or device such as, e.g., a network device.

In some example embodiments, the instructions, when executed by the at least one processor, cause the apparatus to perform at least one of: a) using a round-robin scheme for activating radio processing units, and/or b) using a load triggered activation scheme for activating radio processing units (or, in some embodiments, where there is one, e.g., single, radio processing unit provided, using the load triggered activation scheme for activating the single radio processing unit).

In some example embodiments, when using the round-robin scheme for activating radio processing units, all radio processing units of the terminal device may become active, e.g., in-turn, e.g., without considering a total number of radio processing units that may be sufficient, e.g., for handling current requirements regarding a data processing rate, e.g., an actual bit rate.

In some example embodiments, e.g., when the terminal device is powering on, at least a first radio processing unit may be activated. In some embodiments, the first radio processing unit may e.g. be used for processing data related to control information and a signalling radio bearer, SRB.

In some example embodiments, e.g., a second radio processing unit may be activated, e.g., when the terminal device is powering on. In some embodiments, the second radio processing unit may be used for data processing, e.g., other than the processing of data related to control information and the signalling radio bearer.

In some example embodiments, e.g., when the terminal device is powered on, a further, e.g., additional, radio processing unit may be activated, e.g., once a new data packet is arriving, and so on.

In some example embodiments, the instructions, when executed by the at least one processor, cause the apparatus to transmit second information characterizing the at least one radio processing unit to a network device. In some embodiments, this enables to notify the network device about aspects, e.g., properties, of the terminal device related to its one or more radio processing units.

In some example embodiments, the second information may, e.g., characterize at least one of: a) a number of the radio processing units, e.g., a maximum number of radio processing units supported by the terminal device, or b) a processing capability of the at least one radio processing unit.

In some example embodiments, the instructions, when executed by the at least one processor, cause the apparatus to receive the first information from a or the network device. In some embodiments, e.g., responsive to the terminal device transmitting the second information to the network device, the network device may determine the first information, e.g., based at least on the second information, and may transmit the first information to the terminal device.

In some example embodiments, the instructions, when executed by the at least one processor, cause the apparatus to receive the first information from the network device via at least one of: a) downlink control information, or b) a medium access control, MAC, control element, CE, MAC CE, or c) radio resource control, RRC, signalling.

In some example embodiments, the instructions, when executed by the at least one processor, cause the apparatus to receive a resource grant associated with the at least one radio processing unit.

In some example embodiments, the instructions, when executed by the at least one processor, cause the apparatus to perform at least one of: a) receive an indication in a medium access control protocol data unit, PDU, indicating at least one radio link control, RLC, entity associated with a medium access control service data unit, SDU, contained in the medium access control protocol data unit, or b) receive an indication in a medium access control protocol data unit indicating that a medium access control service data unit contained in the MAC PDU can be passed to any RLC entity configured for a data radio bearer derivable from a logical channel identifier, LCID, field indicated for the MAC SDU in the MAC PDU, or c) receive an indication in a medium access control protocol data unit indicating whether a Logical Channel ID, LCID, field indicated for a MAC SDU contained in the MAC PDU is binding for the medium access control service data unit, or d) determine whether a received medium access control service data unit is an unnumbered radio link control, RLC, data protocol data unit, PDU (in some embodiments, in this case, as an example, an RLC entity for processing the medium access control service data unit may be chosen freely, e.g., within a respective DRB).

Regarding embodiments directed to receiving the indication in the medium access control service data unit indicating whether the LCID field of the medium access control service data unit is binding for the medium access control service data unit, as an example, in some embodiments, some configured LCID values may, e.g., indicate a radio link control entity in question, while, in some embodiments, some other LCID values may, e.g., indicate, e.g., only, a data radio bearer, DRB, or, for example, a group of radio link control entities.

Some example embodiments relate to an apparatus for a terminal device comprising at least one radio processing unit for processing data associated with a radio communication between the terminal device and at least one further device, the apparatus comprising means for: determining first information at least indicating to activate or deactivate the at least one radio processing unit, controlling an operation of the at least one radio processing unit based on the first information. In some embodiments, the means for performing the determining and/or controlling aspects may, e.g., comprise at least one processor, and at least one memory storing instructions that, when executed by the at least one processor, cause the apparatus to perform at least one of the aforementioned aspects of determining and/or controlling. In some embodiments, the means for performing the determining and/or controlling aspects may, e.g., comprise circuitry configured to perform at least one of the aforementioned aspects of determining and/or controlling.

Some example embodiments relate to a method for a terminal device comprising at least one radio processing unit for processing data associated with a radio communication between the terminal device and at least one further device, the method comprising: determining first information at least indicating to activate or deactivate the at least one radio processing unit of the plurality of radio processing units, controlling an operation of the at least one radio processing unit based on the first information.

Some example embodiments relate to an apparatus for a network device for radio communication with a terminal device that comprises at least one radio processing unit for processing data associated with the radio communication between the terminal device and at least the network device, the apparatus comprising at least one processor, and at least one memory storing instructions that, when executed by the at least one processor, cause the apparatus to: determine first information at least indicating to activate or deactivate the at least one radio processing unit of the terminal device, transmit the first information to the terminal device.

In some example embodiments, the network device may adhere to and/or may be based on some accepted (and/or planned) specification, e.g., standard, such as, e.g., 3G, 4G, 5G, 6G, or some other wireless communication standard.

In some example embodiments, the network device may, e.g., be a base station for a wireless, e.g., cellular, communication system, e.g., a gNB.

In some example embodiments, the instructions, when executed by the at least one processor, cause the apparatus to perform at least one of: a) receive second information characterizing the at least one radio processing unit of the terminal device, e.g., from the terminal device, or b) determine the first information, e.g., based on the received second information and/or locally at the network device, or c) transmit the first information to the terminal device, e.g., via at least one of: c1) downlink control information, or c2) a medium access control, MAC, control element, CE, MAC CE, or c3) radio resource control, RRC, signalling.

In some example embodiments, the network device may, e.g., receive the second information from the terminal device, determine the first information, e.g., locally at the network device, e.g., based at least on the second information, and transmit the first information to the terminal device.

In some example embodiments, the instructions, when executed by the at least one processor, cause the apparatus to perform at least one of: a) transmit an indication indicating at least one radio link control, RLC, entity associated with a medium access control service data unit contained in a medium access control protocol data unit, e.g., to the terminal device, or b) transmit an indication in a medium access control protocol data unit indicating that a medium access control service data unit contained in the medium access control protocol data unit, MAC PDU, can be passed to any RLC entity associated with the terminal device configured for a data radio bearer derivable from a logical channel identifier, LCID, field indicated for the medium access control service data unit in the medium access control protocol data unit, e.g., to the terminal device, or c) transmit (e.g., to the terminal device) an indication in a medium access control protocol data unit indicating whether a Logical Channel ID, LCID, field indicated for a medium access control service data unit contained in the medium access control protocol data unit is binding for the medium access control service data unit, d) transmit, to the terminal device, a resource grant associated with the at least one radio processing unit of the terminal device.

Some example embodiments relate to an apparatus for a network device for radio communication with a terminal device that comprises at least one radio processing unit for processing data associated with the radio communication between the terminal device and at least the network device, the apparatus comprising means for: determining first information at least indicating to activate or deactivate the at least one radio processing unit of the terminal device, transmitting the first information to the terminal device. In some embodiments, the means for performing the aforementioned determining and/or transmitting aspects may, e.g., comprise at least one processor, and at least one memory storing instructions that, when executed by the at least one processor, cause the apparatus to perform at least one of the aforementioned aspects of determining and/or transmitting. In some embodiments, the means for performing the determining and/or transmitting aspects may, e.g., comprise circuitry configured to perform at least one of the aforementioned aspects of determining and/or transmitting.

Some example embodiments relate to a method for a network device for radio communication with a terminal device that comprises at least one radio processing unit for processing data associated with the radio communication between the terminal device and at least the network device, the method comprising: determining first information at least indicating to activate or deactivate the at least one radio processing unit of the terminal device, transmitting the first information to the terminal device.

Some example embodiments relate to a device for a wireless communication system, e.g., a cellular communication system, comprising at least one apparatus according to the embodiments.

In some example embodiments, the device for a wireless communication system is, for example, a terminal device, e.g., UE. In other words, some embodiments relate to a terminal device, e.g., user equipment, comprising an apparatus according to the embodiments.

In some example embodiments, the device for a wireless communication system is, for example, a network device, e.g., base station, e.g., gNB. In other words, some embodiments relate to a network device, e.g., base station, e.g., gNB, comprising an apparatus according to the embodiments.

Some example embodiments relate to a communication system, e.g., a wireless, e.g., cellular, communication system, comprising at least one of: a) an apparatus according to the embodiments, or b) a terminal device according to the embodiments, or c) a network device according to the embodiments.

Some example embodiments relate to a computer program comprising instructions which, when executed by an apparatus, cause the apparatus to perform at least some aspects of the method according to the embodiments.

Some example embodiments relate to a data carrier signal carrying and/or characterizing the computer program according to the embodiments.

### Brief description of the Figures

- Fig. 1A: schematically depicts a simplified block diagram according to some examples,
- Fig. 1B: schematically depicts a simplified block diagram according to some examples,
- Fig. 2: schematically depicts a simplified block diagram according to some examples,
- Fig. 3: schematically depicts a simplified flow chart according to some examples,
- Fig. 4: schematically depicts a simplified flow chart according to some examples,
- Fig. 5: schematically depicts a simplified block diagram according to some examples,
- Fig. 6: schematically depicts a simplified flow chart according to some examples,
- Fig. 7: schematically depicts a simplified flow chart according to some examples,
- Fig. 8: schematically depicts a simplified block diagram according to some examples,
- Fig. 9: schematically depicts a simplified block diagram according to some examples,
- Fig. 10: schematically depicts a simplified flow chart according to some examples ,
- Fig. 11: schematically depicts a simplified flow chart according to some examples ,
- Fig. 12A: schematically depicts a simplified block diagram according to some examples ,
- Fig. 12B: schematically depicts a simplified block diagram according to some examples ,
- Fig. 13: schematically depicts a simplified flow chart according to some examples ,
- Fig. 14: schematically depicts a simplified flow chart according to some examples,
- Fig. 15: schematically depicts a simplified block diagram according to some examples,
- Fig. 16: schematically depicts a simplified block diagram according to some examples,
- Fig. 17: schematically depicts a simplified block diagram according to some examples,
- Fig. 18: schematically depicts a simplified flow chart according to some examples,
- Fig. 19: schematically depicts a data structure according to some examples,
- Fig. 20: schematically depicts a simplified block diagram according to some examples.

### Description of some Embodiments

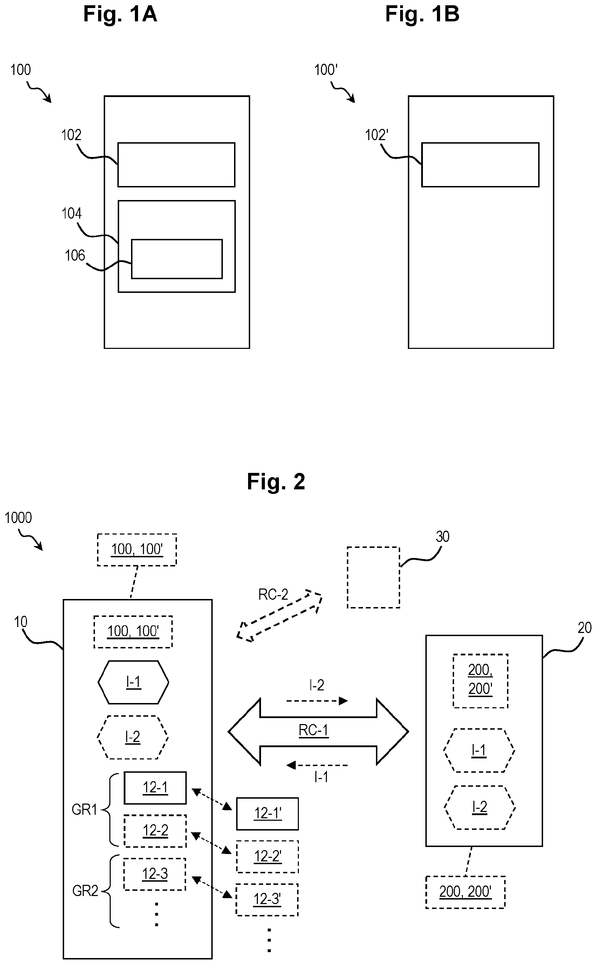

Some example embodiments, see, for example, Fig. 1A, 2, 3, relate to an apparatus 100 for a terminal device 10 (Fig. 2) comprising at least one radio processing unit 12-1, 12-2, 12-3, ... for processing data associated with a radio communication RC-1, RC-2 between the terminal device 10 and at least one further device 20 (e.g., a network device), 30 (e.g., a further terminal device), the apparatus 100 (Fig. 1A) comprising at least one processor 102, and at least one memory 104 storing instructions 106 that, when executed by the at least one processor 102, cause the apparatus 100 to: determine 300 first information I-1 at least indicating to activate or deactivate the at least one radio processing unit , control 302 an operation of the at least one radio processing unit based on the first information I-1. In some embodiments, this enables to flexibly adjust the processing capabilities of the terminal device 10, e.g., to a current load situation.

In some example embodiments (not shown), the terminal device 10 may comprise one, i.e., one single, radio processing unit 12-1.

In some example embodiments, Fig. 2, the terminal device 10 may comprise a plurality of radio processing units, e.g., two or more radio processing units 12-1, 12-2, 12-3, ....

In some examples, each of the at least one radio processing unit(s) 12-1, 12-2, 12-3, ... may comprise a radio link control, RLC, entity 12-1', 12-2', 12-3', ....

It is to be noted that the following embodiments disclosed with reference to the figures primarily relate to configurations of the terminal device 10 having a plurality, i.e., two or more, radio processing units. However, the principle according to the embodiments is, without loss of generality, also applicable to configurations where the terminal device 10 has one radio processing unit.

As an example, in some embodiments, Fig. 2, a, for example hardware-based, for example parallel, processing of the data associated with the radio communication RC-1, RC-2 between the terminal device 10 and at least one further device 20, 30 is enabled by using one or more radio processing units 12-1, 12-2, ....

In some example embodiments, Fig. 2, the first information I-1 may indicate or characterize, respectively, one or more further aspects related to the at least one radio processing unit, e.g., 12-1, e.g., additional to indicating to activate or deactivate the at least one radio processing unit 12-1 of the plurality of radio processing units. As an example, in some embodiments, the first information I-1 may characterize one or more rules for instructing the terminal device to apply a specific pattern or scheme (e.g., at least one of round-robin, or load triggered, or the like) for activating and/or deactivating one or more of the plurality of radio processing units 12-1, 12-2, 12-3,

In some example embodiments, Fig. 2, the terminal device 10 may be suitable for use with a wireless, e.g., cellular, communication system 1000. In some embodiments, the terminal device 10 may, for example, be a user equipment (UE) for a wireless communication system 1000.

In some example embodiments, Fig. 2, at least one of the terminal device 10 or the wireless communication system 1000 may adhere to and/or may be based on some accepted (and/or planned) specification, e.g., standard, such as, e.g., 3G, 4G, 5G, 6G, or some other wireless communication standard.

In some example embodiments, Fig. 2, the terminal device 10 may be configured to exchange data with at least one further device, such as, e.g., a network device, e.g., base station, e.g., gNB 20 (e.g., using uplink and/or downlink information exchange, see block arrow RC-1 of Fig. 2) and/or a further terminal device, e.g., UE, 30 (e.g., using a device-to-device information exchange, e.g., using sidelink radio communication RC-2).

In some example embodiments, Fig. 2, the network device 20 may adhere to and/or may be based on some accepted (and/or planned) specification, e.g., standard, such as, e.g., 3G, 4G, 5G, 6G, or some other wireless communication standard.

In some example embodiments, Fig. 2, one or more radio processing units 12-1, ... of the terminal device 10 are configured to, e.g., at least temporarily, process data associated with a control plane.

In some example embodiments, one or more radio processing units 12-1, ... of the terminal device are configured to, e.g., at least temporarily, process data associated with a user plane.

In some example embodiments, one or more radio processing units 12-1, ... of the terminal device 10 are configured to, e.g., at least temporarily, process data associated with the control plane and with the user plane.

In some example embodiments, Fig. 2, a first group GR1 of one or more radio processing units of the terminal device 10 can be configured to, e.g., at least temporarily, process data associated with the control plane and with the user plane.

In some example embodiments, Fig. 2, a second group GR2 of one or more radio processing units of the terminal device can be configured to, e.g., at least temporarily, process data associated with the user plane, but, for example, is not configured to process data associated with the control plane.

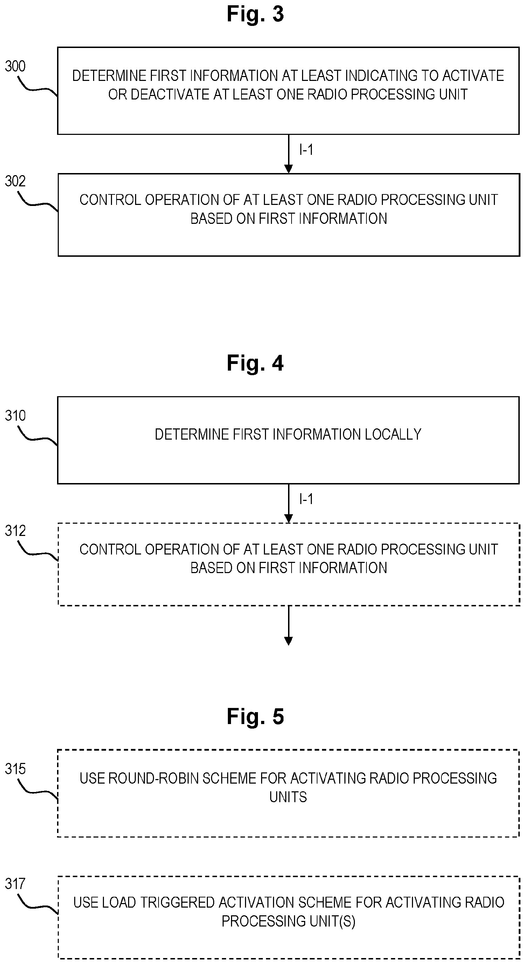

In some example embodiments, Fig. 4, the instructions 106, when executed by the at least one processor 102, cause the apparatus 100 to determine 310 the first information I-1 locally, e.g., at the terminal device 10, e.g., without interaction between the terminal device 10 and another entity or device such as, e.g., a network device 20. The optional block 312 of Fig. 4 symbolizes controlling an operation, such as, e.g., activation or deactivation, of at least one radio processing unit, based on the, e.g., locally determined, first information I-1.

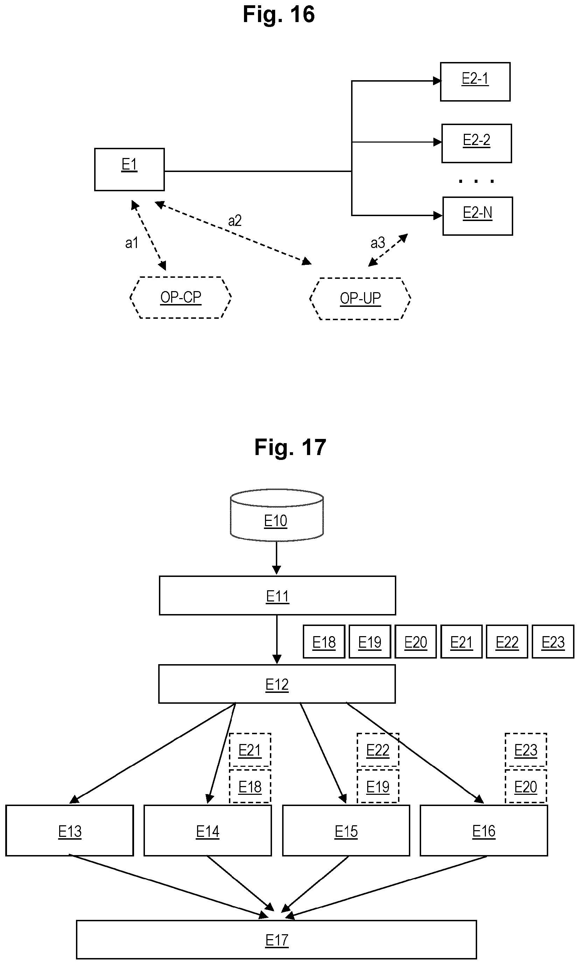

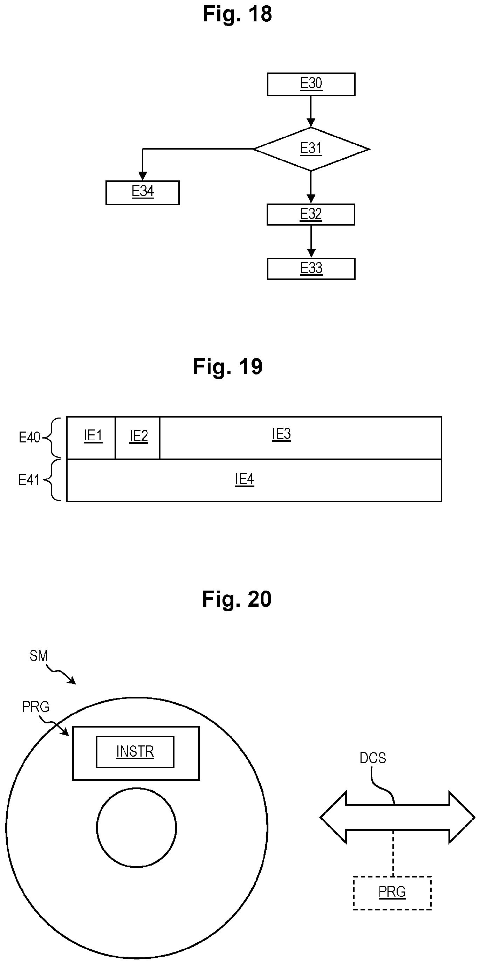

In some example embodiments, Fig. 5, the instructions 106, when executed by the at least one processor 102, cause the apparatus 100 to perform at least one of: a) use 315 a round-robin scheme for activating radio processing units, and/or b) use 317 a load triggered (e.g., processing load triggered) activation scheme for activating radio processing units. Example aspects of some embodiments related to a round-robin scheme for activating radio processing units are explained further below with reference to Fig. 17. Example aspects of some embodiments related to a load triggered activation scheme for radio processing units are explained further below with reference to Fig. 18.

In some example embodiments, Fig. 2, when using the round-robin scheme for activating radio processing units, all radio processing units 12-1, 12-2, 12-3, ... of the terminal device may become active, e.g., in-turn, e.g., without considering a total number of radio processing units that may be sufficient, e.g., for handling current requirements regarding a data processing rate, e.g., an actual bit rate.

In some example embodiments, Fig. 2, e.g., when the terminal device 10 is powering on, at least a first radio processing unit 12-1 may be activated. In some embodiments, the first radio processing unit 12-1 may e.g. be used for processing data related to control information and a signalling radio bearer, SRB.

In some example embodiments, Fig. 2, e.g., a second radio processing unit 12-2 may be activated, e.g., when the terminal device 10 is powering on. In some embodiments, the second radio processing unit 12-2 may be used for data processing, e.g., other than the processing of data related to control information and the signalling radio bearer.

In some example embodiments, Fig. 2, e.g., when the terminal device 10 is powered on, a further, e.g., additional, radio processing unit 12-3, ... may be activated, e.g., once a new data packet is arriving, and so on.

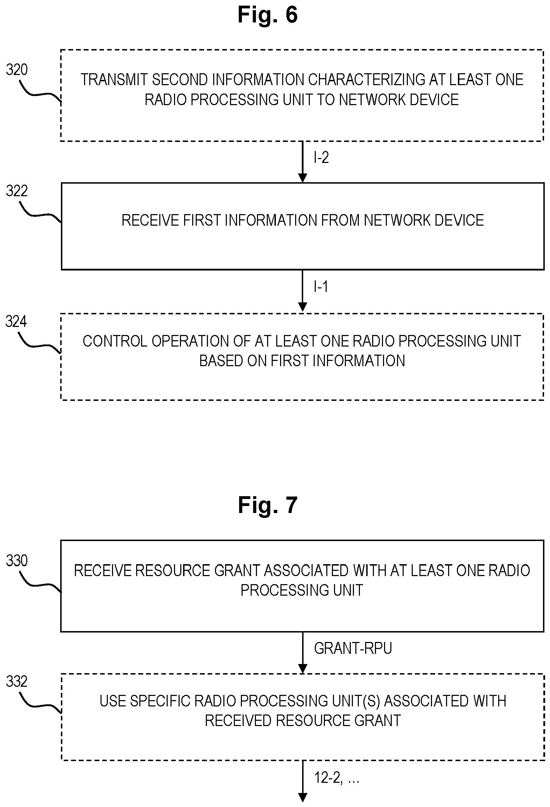

In some example embodiments, Fig. 6, the instructions 106, when executed by the at least one processor 102, cause the apparatus 100 to transmit 320 second information 1-2 characterizing the at least one radio processing unit 12-1, 12-2, 12-3, ... to a network device 20. In some embodiments, this enables to notify the network device 20 about aspects, e.g., properties, of the terminal device 10 related to its radio processing unit(s).

In some example embodiments, Fig. 2, the second information 1-2 may, e.g., characterize at least one of: a) a number of the radio processing units, e.g., a maximum number of radio processing units supported by the terminal device 10, or b) a processing capability of at least one of the radio processing units 12-1, 12-2, 12-3, ....

In some example embodiments, Fig. 6, the instructions 106, when executed by the at least one processor 102, cause the apparatus 100 to receive 322 the first information I-1 from a or the network device 20. In some embodiments, e.g., responsive to the terminal device 10 transmitting the second information 1-2 to the network device 20, the network device 20 may determine the first information I-1, e.g., based at least on the second information 1-2, and may transmit the first information I-1 to the terminal device 10.

In some example embodiments, the instructions 106, when executed by the at least one processor 102, cause the apparatus 100 to receive 322 the first information I-1 from the network device 20 via at least one of: a) downlink control information, or b) a medium access control, MAC, control element, CE, MAC CE, or c) radio resource control, RRC, signalling. The optional block 324 of Fig. 6 symbolizes controlling an operation (e.g., activation or deactivation) of at least one radio processing unit based on the first information I-1 according to some embodiments.

In some example embodiments, Fig. 7, the instructions 106, when executed by the at least one processor 102, cause the apparatus 100 to receive 330 a resource grant GRANT-RPU associated with at least one radio processing unit e.g. 12-2, ... of the plurality of radio processing units. The optional block 332 of Fig. 7 symbolizes using at least one specific radio processing unit e.g. 12-2, ... associated with the resource grant GRANT-RPU.

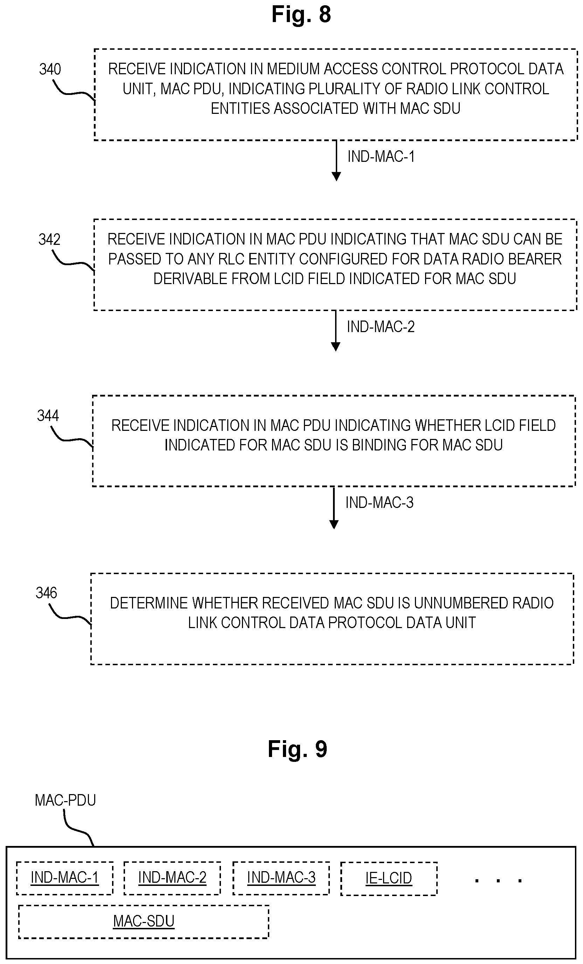

In some example embodiments, Fig. 8, the instructions 106, when executed by the at least one processor 102, cause the apparatus 100 to perform at least one of: a) receive 340 an indication IND-MAC-1 in a medium access control protocol data unit MAC-PDU (see Fig. 9), indicating a plurality of radio link control, RLC, entities associated with a medium access control service data unit MAC-SDU contained in the medium access control protocol data unit MAC-PDU, or b) receive 342 (Fig. 8) an indication IND-MAC-2 in a medium access control protocol data unit MAC-PDU (Fig. 9) indicating that a medium access control service data unit MAC-SDU contained in the medium access control protocol data unit MAC-PDU can be passed to any RLC entity configured for a data radio bearer derivable from a logical channel identifier, LCID, field IE-LCID indicated for the medium access control service data unit MAC-SDU in the medium access control protocol data unit MAC-PDU, or c) receive 344 (Fig. 8) an indication IND-MAC-3, e.g., in a medium access control protocol data unit MAC-PDU (Fig. 9), indicating whether a Logical Channel ID, LCID, field indicated for a medium access control service data unit MAC-SDU contained in the medium access control protocol data unit MAC-PDU is binding for the medium access control service data unit MAC-SDU, or d) determine 346 (Fig. 8) whether a received medium access control service data unit is an unnumbered radio link control, RLC, data protocol data unit, PDU.

In some example embodiments, if the determination 346 yields that a received medium access control service data unit MAC-SDU is an unnumbered radio link control, RLC, data protocol data unit, PDU, as an example, it is concluded that an RLC entity (as, e.g., provided by at least one of the radio processing units 12-1, 12-2, ...) for processing the medium access control service data unit MAC-SDU may be chosen freely, e.g., within a respective DRB.

In some examples, one or more of the example aspects 340, 342, 344, 346 explained above with respect to Fig. 8 may be used, e.g., to facilitate a selection of an RLC entity (and thereby, e.g., the RPU to be activated), e.g., for a received RLC PDU, i.e., MAC SDU.

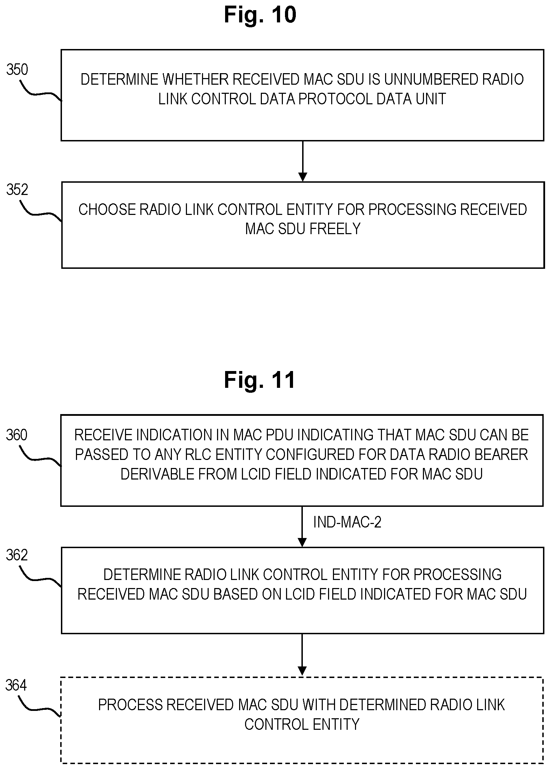

In some examples, an RLC-entity selection may follow, e.g., employ, at least one of the following aspects: a) the indication IND-MAC-1, or b) the indication IND-MAC-2 (as, e.g., depicted by Fig.11), or c) the indication IND-MAC-3 (e.g., in the case "not binding"), or d) when a MAC SDU is determined to be an unnumbered RLC data PDU (as, e.g., in Fig.10) .

As a further example, regarding some embodiments directed to receiving 344, Fig. 8, the indication IND-MAC-3 in the medium access control protocol data unit MAC-PDU indicating whether the LCID field IE-LCID (Fig. 9) indicated for the medium access control service data unit MAC-SDU contained in the medium access control protocol data unit MAC-PDU is binding for the medium access control service data unit MAC-SDU, in some embodiments, some configured LCID values may, e.g., indicate a radio link control entity in question, while, in some embodiments, some other LCID values may, e.g., indicate, e.g., only, a data radio bearer, DRB, or, for example, a group of radio link control entities. In some embodiments, based on this indication, one or more radio processing units 12-1, 12-2, ... of the terminal device 10 may be determined for processing the medium access control service data unit MAC-SDU.

In some example embodiments, Fig. 10, the instructions 106, when executed by the at least one processor 102, cause the apparatus 100 to determine 350 whether a received MAC SDU is an unnumbered RLC data protocol data unit, PDU, and, if so, to choose 352 an RLC entity for processing the received MAC SDU freely.

In some example embodiments, Fig. 11, the instructions 106, when executed by the at least one processor 102, cause the apparatus 100 to perform at least one of: a) receiving 360 an indication IND-MAC-2 in a MAC PDU indicating that a MAC SDU contained in the MAC PDU can be passed to any RLC entity configured for a data radio bearer derivable from a logical channel identifier, LCID, field IE-LCID (Fig. 9) indicated for the MAC SDU in the MAC PDU, or b) determining 362 an RLC entity for processing the received MAC SDU based on the LCID field IE-LCID indicated for the received MAC SDU, or c) processing 364 the received MAC SDU with the so determined RLC entity, e.g., using one or more of the radio processing units 12-1, 12-2, 12-3, ... (Fig. 2).

Some example embodiments, Fig. 1B, relate to an apparatus 100' for a terminal device 10 (Fig. 2) comprising at least one radio processing unit 12-1, 12-2, 12-3, ... for processing data associated with a radio communication RC-1, RC-2 between the terminal device 10 and at least one further device 20, 30, the apparatus 100' comprising means 102' for: determining 300 (Fig. 3) first information at least indicating to activate or deactivate at least one radio processing unit , controlling 302 an operation of the at least one radio processing unit based on the first information. In some embodiments, Fig. 1B, the means 102' for performing the determining and/or controlling aspects may, e.g., comprise at least one processor 102 (see, for example, Fig. 1A), and at least one memory 104 storing instructions 106 that, when executed by the at least one processor 102, cause the apparatus 100' to perform at least one of the aforementioned aspects of determining 300 and/or controlling 302. In some embodiments, Fig. 1B, the means 102' for performing the determining 300 and/or controlling 302 aspects may, e.g., comprise circuitry (not shown) configured to perform at least one of the aforementioned aspects of determining 300 and/or controlling 302.

Some example embodiments, Fig. 3, relate to a method for a terminal device 10 comprising at least one radio processing unit for processing data associated with a radio communication between the terminal device and at least one further device, the method comprising: determining 300 first information I-1 at least indicating to activate or deactivate the at least one radio processing unit, controlling 302 an operation of the at least one radio processing unit based on the first information I-1.

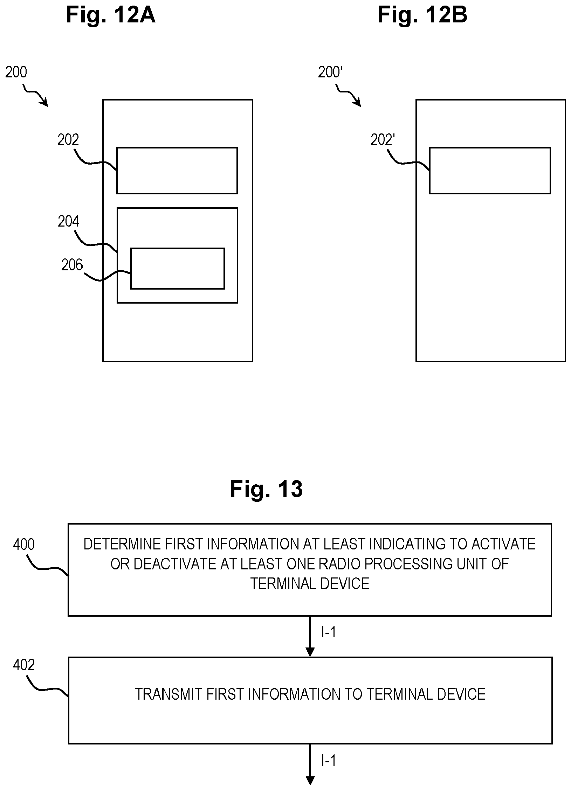

Some example embodiments, Fig. 12A, relate to an apparatus 200 for a network device 20 (Fig. 2) for radio communication RC-1 with a terminal device 10 that comprises at least one radio processing unit 12-1, 12-2, 12-3, ... for processing data associated with the radio communication RC-1 between the terminal device 10 and at least the network device 20, the apparatus 200 comprising at least one processor 202, and at least one memory 204 storing instructions 206 that, when executed by the at least one processor 202, cause the apparatus 200 to: determine 400 (Fig. 13) first information I-1 at least indicating to activate or deactivate the at least one radio processing unit of the terminal device 10, transmit 402 the first information I-1 to the terminal device 10.

In some example embodiments, Fig. 2, the network device 20 may adhere to and/or may be based on some accepted (and/or planned) specification, e.g., standard, such as, e.g., 3G, 4G, 5G, 6G, or some other wireless communication standard.

In some example embodiments, as mentioned above, the network device 20 may, e.g., be a base station for a wireless, e.g., cellular, communication system 1000, e.g., a gNB.

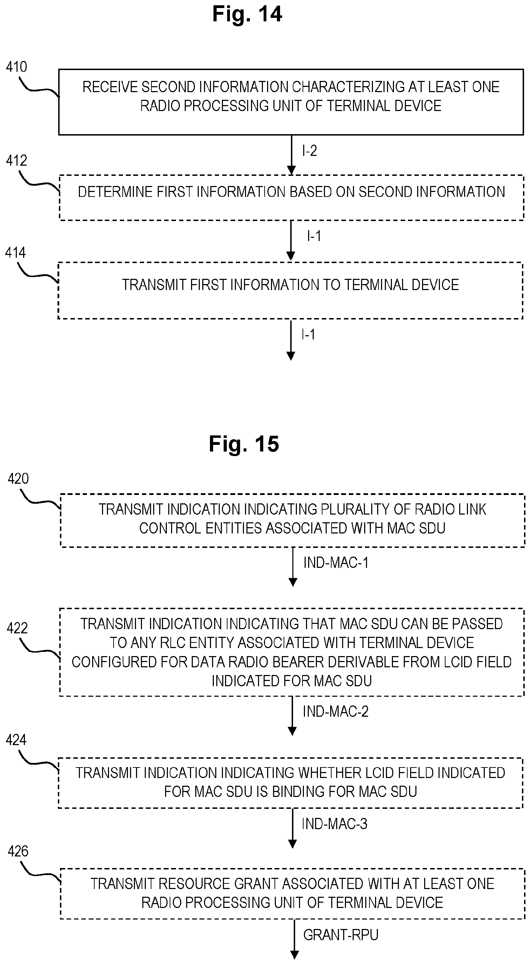

In some example embodiments, Fig. 14, the instructions 206, when executed by the at least one processor 202, cause the apparatus 200 to perform at least one of: a) receive 410 second information I-2 characterizing the at least one radio processing unit of the terminal device 10, e.g., from the terminal device 10, or b) determine 412 the first information I-1, e.g., based on the received second information I-2 and/or locally at the network device 20, or c) transmit 414 the first information I-1 to the terminal device 10, e.g., via at least one of: c1) downlink control information, or c2) a medium access control, MAC, control element, CE, MAC CE, or c3) a radio resource control, RRC, signalling.

In some example embodiments, Fig. 14, the network device 20 may, e.g., receive 410 the second information I-2 from the terminal device 10, determine 412 the first information I-1, e.g., locally at the network device 20, e.g., based at least on the second information I-2, and transmit 414 the first information I-1 to the terminal device.

In some other example embodiments, the network device 20 may, e.g., determine 412 the first information I-1, e.g., locally at the network device 20, e.g., not based on the second information I-2 (but, for example, based on other information such as configuration information e.g. shared a priori with the terminal device, or standardization, or the like), and transmit 414 the first information I-1 to the terminal device.

In some example embodiments, Fig. 15, the instructions 206, when executed by the at least one processor 202, cause the apparatus 200 to perform at least one of: a) transmit 420 an indication IND-MAC-1 indicating a plurality of radio link control, RLC, entities associated with a medium access control service data unit MAC-SDU contained in a medium access control protocol data unit, MAC PDU, e.g., to the terminal device 10, or b) transmit 422 an indication IND-MAC-2 in a MAC PDU indicating that a medium access control service data unit MAC-SDU contained in the MAC PDU can be passed to any RLC entity associated with the terminal device 10 configured for a data radio bearer derivable from a logical channel identifier, LCID, field IE-LCID (Fig. 9) indicated for the medium access control service data unit MAC -SDU in the MAC PDU, e.g., to the terminal device 10, or c) transmit 424 (e.g., to the terminal device 10) an indication IND-MAC-3 in a MAC PDU indicating whether a Logical Channel ID, LCID, field indicated for a medium access control service data unit, MAC SDU, contained in the MAC PDU is binding for the MAC SDU, d) transmit 426, to the terminal device 10, a resource grant GRANT-RPU associated with at least one radio processing unit 12-2 of the plurality of radio processing units 12-1, 12-2, 12-3, ... of the terminal device 10.

Some example embodiments, Fig. 12B, relate to an apparatus 200' for a network device 20 (Fig. 20) for radio communication RC-1 with a terminal device 10 that comprises at least one radio processing unit for processing data associated with the radio communication between the terminal device 10 and at least the network device 20, the apparatus 200' comprising means 202' for: determining 400 (Fig. 13) first information I-1 at least indicating to activate or deactivate the at least one radio processing unit of the plurality of radio processing units of the terminal device, transmitting 402 the first information I-1 to the terminal device 10. In some example embodiments, the means 202' for performing the aforementioned determining 400 and/or transmitting 402 aspects may, e.g., comprise at least one processor 202 (Fig. 12A), and at least one memory 204 storing instructions 206 that, when executed by the at least one processor 202, cause the apparatus 200' to perform at least one of the aforementioned aspects of determining 400 and/or transmitting 402. In some example embodiments, the means 202' for performing the determining and/or transmitting aspects may, e.g., comprise circuitry (not shown) configured to perform at least one of the aforementioned aspects of determining and/or transmitting.

Some example embodiments, Fig. 13, relate to a method for a network device 20 for radio communication RC-1 with a terminal device 10 that comprises at least one radio processing unit for processing data associated with the radio communication between the terminal device and at least the network device, the method comprising: determining 400 first information I-1 at least indicating to activate or deactivate at least one radio processing unit of the plurality of radio processing units of the terminal device, transmitting 402 the first information I-1 to the terminal device 10.

Some example embodiments, Fig. 2, relate to a device 10, 20 for a wireless communication system 1000, e.g., a cellular communication system, comprising at least one apparatus 100, 100', 200, 200' according to the embodiments.

In some example embodiments, Fig. 2, the device for a wireless communication system is, for example, a terminal device, e.g., UE 10. In other words, some embodiments relate to a terminal device, e.g., user equipment, 10 comprising an apparatus 100, 100' according to the embodiments. In some embodiments, the apparatus 100, 100' may be provided for the terminal device, but, for example, not necessarily integrated into the terminal device 10. In some embodiments, the apparatus 100, 100' or its functionality, respectively, may be integrated into the terminal device 10.

In some example embodiments, Fig. 2, the device for a wireless communication system 1000 is, for example, a network device, e.g., base station, e.g., gNB 20. In other words, some embodiments relate to a network device, e.g., base station, e.g., gNB, 20 comprising an apparatus 200, 200' according to the embodiments. In some embodiments, the apparatus 200, 200' may be provided for the network device 20, but, for example, not necessarily integrated into the network device 20. In some embodiments, the apparatus 200, 200' or its functionality, respectively, may be integrated into the network device 20.

Some example embodiments, Fig. 2, relate to a communication system, e.g., a wireless, e.g., cellular, communication system, 1000 comprising at least one of: a) an apparatus 100, 100', 200 200' according to the embodiments, or b) a terminal device 10 according to the embodiments, or c) a network device 20 according to the embodiments.

In the following, further example aspects and embodiments are disclosed, which, in some embodiments, may be combined with each other and/or with at least one of the aforementioned aspects.

Fig. 16 schematically depicts a simplified block diagram according to some example embodiments. Element E1 symbolizes a first radio processing unit, RPU, for a terminal device according to the embodiments, and the elements E2-1, E2-2, ..., E2-N symbolize further RPUs.

In some example embodiments, the first RPU E1 may be configured to handle both control plane operation OP-CP and user plane operation OP-UP, see the arrows a1, a2, while the further RPUs E2-2, ..., E2-N may, e.g., mainly, handle user plane operation, see arrow a3.

In some example embodiments, the terminal device 10 (Fig. 2), e.g., after power on, may have the first RPU E1 in active state. In some embodiments, optionally, the terminal device 10 can have, for example, one further RPU E2-1 in an active state as well, e.g., in case the first RPU E1 does not handle any UP operation UP-UP.

In some example embodiments, the remaining RPUs E2-2, ..., E2-N may, e.g., be activated according to a round-robin scheme or according to a load triggered activation scheme, as mentioned above.

In some example embodiments, if a specific RPU is not used for processing anymore, it may be, at least temporarily, deactivated, which, in some embodiments, may contribute to energy efficiency.

Fig. 17 schematically depicts a simplified block diagram according to some example embodiments. Element E10 symbolizes an exemplary QoS flow, element E11 symbolizes a mapping of QoS flows to, presently for example four, radio processing units E13, E14, E15, E16, and element E12 symbolizes a data packet distribution for distributing data packets associated with the mapping block E11 to the radio processing units E13, E14, E15, E16. Element E17 symbolizes a PHY processing block. Elements E18, E19, E20, E21, E22, E23 symbolize data packets, which, in some embodiments, may be assigned to different ones of the radio processing units E13, E14, E15, E16 based on a round-robin scheme, thus, e.g., activating different ones of the radio processing units E13, E14, E15, E16 based on the round-robin scheme. As an example, for processing the data packet E18, the RPU E14 may be activated, and for processing a subsequent data packet E19, the next RPU E15 may be activated, and for processing a subsequent data packet E20, the next RPU E16 may be activated. As can be seen from Fig. 17, for processing a further subsequent data packet E21, the RPU E14 is used, i.e., starting a new round according to the round-robin scheme, and so on.

In some example embodiments, e.g., using the round-robin scheme, all RPUs E13, ..., E16 may become active in-turn, e.g., without considering a total number of RPUs that would be needed to handle an actual bit rate. In some embodiments, e.g., when the terminal device 10 is powering on, together with the first RPU E13 (e.g., assuming only for SRBs and control information processing), at least one further RPU E14 may be activated, e.g., automatically (e.g., without human interaction), for data processing. In some embodiments, following the round-robin scheme, additional RPUs may be activated, e.g., once a new data packet is coming in. In some embodiments, at least some of the further RPUs E14, E15, E16 without data packet for processing may be deactivated.

Fig. 18 schematically depicts a simplified flow chart according to some example embodiments illustrating example aspects of a processing load triggered activation of radio processing unit(s). Element E30 symbolizes a data packet to be processed, element E31 symbolizes a determination, whether a processing load exceeds a predetermined threshold, e.g., of a single RPU of the terminal device 10 (Fig. 2). Element E32 symbolizes a determination of a number of RPUs required, e.g., for handling the processing load, and element E33 symbolizes an activation of the additional number of RPUs, as, e.g., determined by element E32, and a routing of the data to be processed by the additionally activated RPUs to these additional RPUs. Element E34 symbolizes a routing of data to be processed by a currently active RPU, e.g., if the determination E31 yields that the processing load does not exceed the predetermined threshold associated with the single RPU. In some embodiments, the scheme explained with reference to Fig. 18 can be efficiently scaled, e.g., for using an arbitrary number of additional RPUs.

In some example embodiments, similar to activating additional RPUs, e.g., once an amount of data to be processed becomes smaller, the terminal device 10 (Fig. 2) may compare the amount of data with the predetermined threshold and may deactivate one or more of the additional RPUs.

In the following, further example aspects related to some embodiments, e.g., for processing load triggered RPU activation, are provided.

In some example embodiments, one or more, e.g. further, radio processing units are, e.g. only, activated if a coming data rate is higher than a threshold associated with a processing capability of the currently active RPU(s) or a threshold which may, e.g., be configured and/or dependent on e.g., at least one of: a capability of the terminal device 10, or a number of active RPUs, or a channel condition, or quality of service (QoS) requirements of application data, or potential retransmission, e.g., at lower layers, and so on.

As an example, in some embodiments, the maximum processing capability (which may, e.g., be terminal device implementation dependent) for one radio processing unit is 1Gbps, so that, in some embodiments, a further radio processing unit may be activated once the incoming data rate is higher than 1Gbps.

In some example embodiments, the maximum processing capability of a radio processing unit may be defined, e.g., specified, in a, for example accepted, specification, such as, e.g., a standard, e.g., in a similar way as the category of a UE, see, for example, 3GPP TS 38.306 "User Equipment (UE) radio access capabilities".

In some example embodiments, e.g., taking "Total layer 2 buffer size for DL/UL" as one example parameter, a total layer 2 buffer size may be defined as the sum of the number of bytes that the terminal device 10 is capable of storing in RLC transmission windows and RLC reception and reassembly windows and also in PDCP (packet data convergence protocol) reordering windows, e.g., for all radio bearers.

In some example embodiments, e.g., once a required buffer size from active application data flows is larger than a size which can be handled by, for example, one radio processing unit, at least one additional further radio processing unit may be activated.

In some example embodiments, a processing capability can, e.g., be reported by the terminal device 10 to the network device 20, e.g., during an initial RRC (Radio Resource Control) establishment, e.g., as a part of the capability of the terminal device 10.

In some example embodiments, e.g., as one implementation example, the terminal device 10 may be requested to report e.g., a number of RPUs in the terminal device 10, and, optionally, a capability of at least one, for example each, RPU.

In some example embodiments, different aspects or alternatives can be considered related to such reporting: Aspect 1: The terminal device 10 reports maximum data rate/throughput supported by, for example each, radio processing unit, e.g., without consideration of channel condition. Aspect 2: Channel condition dependent (e.g., in case RPU-based retransmission) reporting. In this case, the terminal device 10 may report information related to channel conditions, e.g., organized in the form of a table, e.g., characterizing SINR vs. maximum throughput.

In some example embodiments, a processing capability of the terminal device 10 can be considered as a part of a UE context which, in some embodiments, can be used in different procedures e.g., handover. In some embodiments, e.g., during handover, such capability information can be delivered from a serving cell to the target cell. In other words, in some embodiments, the network device 20 (Fig. 2) may be configured to transmit information characterizing a processing capability of the terminal device 10 (e.g., using the second information I-2 or based on the second information I-2) to at least one further device, e.g., to another network device, e.g., base station, e.g., target base station for a handover.

In some example embodiments, combinations of a round-robin scheme and a processing load triggered scheme for activation of radio processing units can also be used. For example, in some embodiments, a first packet may be allocated to the first RPU 12-1 (Fig. 2). In some embodiments, when the second packet arrives, it may be allocated to the first RPU 12-1 if the first RPU 12-1 is already ready with the first packet. Otherwise, in some embodiments, the second packet may be allocated to the second RPU 12-2. And, in some embodiments, when a third packet arrives, it may be allocated to the first or the second RPU if they are already free (e.g., to the first RPU 12-1 if both RPUs 12-1, 12-2 are free), if not then a third RPU 12-3 is activated.

In some example embodiments, a similar procedure may be applied when further new packets arrive. In some embodiments, e.g., in case all RPUs are busy at the arrival time of a packet, a regular round-robin scheme can be applied or, as another option, the newly arrived packet may be put into a queue of the RPU with the shortest job queue at the time.

In some example embodiments, one given RLC entity may be handled by a single RPU, at least at any one time. Thus, in some embodiments, activating different RPUs, e.g., to process data of a single DRB, may imply that several RLC entities are configured for that DRB.

In some example embodiments, e.g., related to reception of RLC PDUs, a received RLC Status PDU and any RLC Data PDU with a sequence number should be handled by the right RLC entity, so that the RLC state variables within that entity can be maintained correctly. In contrast, in some embodiments, which of several RLC entities available for a DRB should handle a received unnumbered RLC Data PDU, such as, e.g., an unsegmented Data PDU, e.g., in case of NR (New Radio) RLC, does not make a difference.

In some example embodiments, e.g., to support a selection of an RLC entity (and thereby, for example, the specific RPU to be activated) for a received RLC PDU, the following aspects are proposed.

In some example embodiments, e.g., for a MAC SDU, an indication in its MAC subheader may indicate that the MAC SDU can be passed to any RLC entity configured for a DRB derivable from the LCID field.

In some example embodiments, some configured LCID values may, e.g., indicate an exact RLC entity in question, while also some other LCID values may be configured which indicate, for example only, the DRB or, as an example, a group of RLC entities.

In some example embodiments, e.g., for a received MAC SDU, RLC-header contents may be inspected, e.g., to determine whether the MAC SDU is an unnumbered RLC Data PDU. If yes, in some embodiments, the RLC entity within the DRB (e.g., as derived from MAC-header contents) can be chosen freely.

As can be seen, in some example embodiments, the principle according to the embodiments enables to provide a, for example purely, terminal device-based approach regarding an activation and/or deactivation of radio processing units. In other words, in some embodiments, it may, e.g., be up to the implementation of the terminal device 10 to determine at least one of: a) a number of radio processing units to be activated, or b) a respective threshold value, or c) a data routing within the terminal device.

In some other example embodiments, the terminal device 10 may report a number of RPUs to the network, e.g., to the network device 20, e.g., using the second information I-2 (see optional block 320 of Fig. 6). Thus, in some example embodiments, the network device 20 may have a clear knowledge, e.g., about a maximum throughput the terminal device 10 can support and, for example, about the processing capability of one or more radio processing units 12-1, 12-2, 12-3, ... of the terminal device 10.

In some example embodiments, at least one of a) an activation or b) a deactivation of one or more radio processing units can be controlled, e.g., triggered, by the network device 20, e.g., by transmitting the first information I-1, see, for example, block 402 of Fig. 13.

For example, considering an example downlink (DL) reception, e.g., in case that buffered data in the network device 20 to be sent during one time window is smaller than an amount of data which can be processed by one radio processing unit of the terminal device 10 within the considered time window, in some embodiments, the network device 20 can indicate to the terminal device 10, e.g., using the first information I-1, to deactivate other radio processing units 12-3, ..., e.g., via downlink control information (DCI) or other signalling such as, e.g., MAC Control Element (MAC CE).

In some example embodiments, e.g., in case a large amount of DL data is to be transmitted to the terminal device 10, the network device 20 can inform the terminal device 10 to activate one or more additional radio processing units.

In some example embodiments, the network device 20 may provide one or more resource grants GRANT-RPU (Fig. 15), which are associated with, e.g., specific for, at least one radio processing unit of the terminal device 10.

In some example embodiments, e.g., in case of processing load triggered RPU activation, the RPUs may at least partly operate on common memory and/or buffers, so that possible retransmissions of data first handled by one specific RPU e.g., 12-2 can be handled by another RPU e.g., 12-3, e.g., when the load dictates a different RPU to be used.

While in some example embodiments, it may be considered that the first RPU 12-1 (Fig. 2) does not handle any user plane data, in some other example embodiments, the first RPU 12-1 may be configured to (also) handle user plane data. In other words, in some embodiments, the first RPU 12-1 may be configured to handle both control plane data and user plane data.

Fig. 19 schematically depicts a data structure according to some example embodiments, which, in some embodiments, may be used to support a selection of an RLC entity (and thus, e.g., a selection of an RPU), e.g., by the terminal device 10, e.g., for a received PDU. Depicted are two octets E40, E41, which comprise four information elements IE1, IE2, IE3, IE4. In some embodiments, the data structure may, e.g., form part of a MAC subheader of a MAC PDU, as may, e.g., be processed by at least one of the terminal device 10 or the network device 20.

In some example embodiments, the first information element IE1, which may also be denoted as "BL", indicates whether a) a Logical Channel ID field indicated in the MAC subheader accompanying a MAC SDU is binding for the MAC SDU or b) the Logical Channel ID field indicated in the MAC subheader accompanying a MAC SDU is not binding for the MAC SDU. In some example embodiments, this indication may be coded by providing the first information element IE1 with a length of one bit, and, for example, a bit value of "0" indicating aspect a) (e.g., LCID field is binding), whereas a bit value of "1" indicates aspect b) (e.g., LCID field is not binding).

In some example embodiments, the example data structure of Fig. 19 may, e.g., replace or supplement the data structure as depicted by Fig. 6.1.2-1 of 3GPP TS 38.321, wherein, for example, the first information element IE1 replaces the Reserved bit "R" of Fig. 6.1.2-1 of 3GPP TS 38.321.

In some example embodiments, the second information element IE2 of Fig. 19 indicates a format, e.g., characterizing the Format field of Fig. 6.1.2-1 of 3GPP TS 38.321.

In some example embodiments, the third information element IE3 indicates, e.g., characterizes the LCID field as provided by Fig. 6.1.2-1 of 3GPP TS 38.321.

In some example embodiments, the fourth information element IE4 of Fig. 19 characterizes a "Length" field "L" of Fig. 6.1.2-1 of 3GPP TS 38.321.

In some example embodiments, a similar extension (e.g., regarding replacement of the "Reserved bit R") may also be made to Fig. 6.1.2-2 of 3GPP TS 38.321, wherein three octets are provided (not shown) in Fig. 19 to accommodate a 16 bit length value, as opposed to the 8 bit length value of the fourth information element IE4 exemplarily depicted by Fig. 19.

In the following, text proposals, e.g., for extending some planned or accepted specification, e.g., by at least one aspect according to the example embodiments, are provided, which illustrate the respective aspect(s) according to the embodiments in the context of such specification(s)/standard(s). Note that the following text proposals are for illustrative purposes only, not intending to provide any limitation to the scope of protection as defined by the claims.

In some example embodiments, the following text proposal is provided to extend 3GPP TS 38.322 or other specifications, wherein **bold underlined text** symbolizes aspects related to some embodiments:
5.2 Data transfer procedures
5.2.2UM data transfer
5.2.2.1 Transmit operations
5.2.2.1.1 General
   When submitting a UMD PDU to lower layer, the transmitting UM RLC entity shall:
   - if the UMD PDU contains a segment of an RLC SDU:
   - set the SN of the UMD PDU to TX_Next;
   - **indicate to lower layer that the logical channel for this UMD PDU is binding;**
   - **else indicate to lower layer that the logical channel for this UMD PDU is not binding;**
   - if the UMD PDU contains a segment that maps to the last byte of an RLC SDU, then increment TX_Next by one.
5.2.3AM data transfer
5.2.3.1 Transmit operations
5.2.3.1.1 General

The transmitting side of an AM RLC entity shall prioritize transmission of RLC control PDUs over AMD PDUs. The transmitting side of an AM RLC entity shall prioritize transmission of AMD PDUs containing previously transmitted RLC SDUs or RLC SDU segments over transmission of AMD PDUs containing not previously transmitted RLC SDUs or RLC SDU segments.

The transmitting side of an AM RLC entity shall maintain a transmitting window according to the state variable TX_Next_Ack as follows:
- a SN falls within the transmitting window if TX_Next_Ack <= SN < TX_Next_Ack + AM_Window_Size;
- a SN falls outside of the transmitting window otherwise.

The transmitting side of an AM RLC entity shall not submit to lower layer any AMD PDU whose SN falls outside of the transmitting window. For each RLC SDU received from the upper layer, the AM RLC entity shall:
- associate a SN with the RLC SDU equal to TX_Next and construct an AMD PDU by setting the SN of the AMD PDU to TX_Next;
- increment TX_Next by one.

When submitting an AMD PDU that contains a segment of an RLC SDU, to lower layer, the transmitting side of an AM RLC entity shall:
- set the SN of the AMD PDU to the SN of the corresponding RLC SDU. **When submitting an AMD PDU to lower layer, the transmitting side of an AM RLC entity shall:**
- **indicate to lower layer that the logical channel for this AMD PDU is binding.**

The transmitting side of an AM RLC entity can receive a positive acknowledgement (confirmation of successful reception by its peer AM RLC entity) for an RLC SDU by the following:
- STATUS PDU from its peer AM RLC entity.

When receiving a positive acknowledgement for an RLC SDU with SN = x, the transmitting side of an AM RLC entity shall:
- send an indication to the upper layers of successful delivery of the RLC SDU;
- set TX_Next_Ack equal to the SN of the RLC SDU with the smallest SN, whose SN falls within the range TX_Next_Ack <= SN <= TX_Next and for which a positive acknowledgment has not been received yet.

5.3 ARQ procedures
5.3.4 Status reporting

An AM RLC entity sends STATUS PDUs to its peer AM RLC entity in order to provide positive and/or negative acknowledgements of RLC SDUs (or portions of them).

Triggers to initiate STATUS reporting include:
- Polling from its peer AM RLC entity:
- When an AMD PDU with SN = x and the P field set to "1" is received from lower layer, the receiving side of an AM RLC entity shall:
- if the AMD PDU is to be discarded as specified in clause 5.2.3.2.2; or
- if x < RX_Highest_Status or x >= RX_Next + AM_Window_Size:
- trigger a STATUS report.
- else:
- delay triggering the STATUS report until x < RX_Highest_Status or x >= RX_Next + AM_Window_Size.

NOTE 1: This ensures that the RLC Status report is transmitted after HARQ reordering.
- Detection of reception failure of an AMD PDU
- The receiving side of an AM RLC entity shall trigger a STATUS report when t-Reassembly expires.

NOTE 2: The expiry of t-Reassembly triggers both RX_Highest_Status to be updated and a STATUS report to be triggered, but the STATUS report shall be triggered after RX_Highest_Status is updated.

When STATUS reporting has been triggered, the receiving side of an AM RLC entity shall:
- if t-StatusProhibit is not running:
   - at the first transmission opportunity indicated by lower layer, construct a STATUS PDU and submit it to lower layer **with an indication that the logical channel for this STATUS PDU is binding.**
   - else:
      - at the first transmission opportunity indicated by lower layer after t-StatusProhibit expires, construct a single STATUS PDU even if status reporting was triggered several times while t-StatusProhibit was running and submit it to lower layer **with an indication that the logical channel for this STATUS PDU is binding.**

When a STATUS PDU has been submitted to lower layer, the receiving side of an AM RLC entity shall:
- start t-StatusProhibit.

When constructing a STATUS PDU, the AM RLC entity shall:
- <...>.

In some example embodiments, the following text proposal is provided to extend 3GPP TS 38.321 or other specifications, wherein **bold underlined text** symbolizes aspects related to some embodiments:
5.3 DL-SCH data transfer
5.3.3 Disassembly and demultiplexing

The MAC entity shall disassemble and demultiplex a MAC PDU as defined in clauses 6.1.2 and 6.1.5a.

When a MAC entity receives a MAC PDU for MAC entity's G-RNTI or G-CS-RNTI, or by the configured downlink assignment for MBS multicast containing an LCID or eLCID which is not configured, the MAC entity shall at least:
1> discard the received subPDU.

**When a MAC entity receives a MAC SDU on DL-SCH, the MAC entity shall:**
**1> if the Bindling LCID field indicates that the LCID field is binding for the MAC SDU:**
   **2> deliver the MAC SDU to the upper-layer entity indicated by the LCID field;**
**1> else deliver the MAC SDU to any upper-layer entity handling DL-SCH that is configured for the same radio bearer.**

6 Protocol Data Units, formats and parameters
6.1 Protocol Data Units
6.1.2 MAC PDU (DL-SCH and UL-SCH except transparent MAC and Random Access Response)

A MAC PDU consists of one or more MAC subPDUs. Each MAC subPDU consists of one of the following:
- A MAC subheader only (including padding);
- A MAC subheader and a MAC SDU;
- A MAC subheader and a MAC CE;
- A MAC subheader and padding.

The MAC SDUs are of variable sizes.

Each MAC subheader corresponds to either a MAC SDU, a MAC CE, or padding.

A MAC subheader except for fixed sized MAC CE, padding, and a MAC SDU containing UL CCCH consists of the header fields **BL**/F/LCID/(eLCID)/L. A MAC subheader for fixed sized MAC CE, padding, and a MAC SDU containing UL CCCH consists of the two header fields R/LCID/(eLCID). [representation of Figure 6.1.2-1 with Reserve bit field "R" replaced by bit field "BL" according to the embodiments, see the first information element IE-1 of Fig. 19]

Figure 6.1.2-1: **BL**/F/LCID/(eLCID)/L MAC subheader with 8-bit L field
[representation of Figure 6.1.2-2 with Reserve bit field "R" replaced by bit field "BL" according to the embodiments, see the first information element IE-1 of Fig. 19]

Figure 6.1.2-2: **BL**/F/LCID/(eLCID)/L MAC subheader with 16-bit L field
6.2 Formats and parameters
6.2.1 MAC subheader for DL-SCH and UL-SCH

The MAC subheader consists of the following fields:
- LCID: The Logical Channel ID field identifies the logical channel instance of the corresponding MAC SDU or the type of the corresponding MAC CE or padding as described in Tables 6.2.1-1, 6.2.1-1c and 6.2.1-2 for the DL-SCH and UL-SCH respectively. There is one LCID field per MAC subheader. The size of the LCID field is 6 bits. If the LCID field is set to 34, one additional octet is present in the MAC subheader containing the eLCID field and follow the octet containing LCID field. If the LCID field is set to 33, two additional octets are present in the MAC subheader containing the eLCID field and these two additional octets follow the octet containing LCID field;
   NOTE 1: For MBS broadcast, a logical channel is identified based on G-RNTI and LCID if the same LCID is allocated for logical channels corresponding to different G-RNTIs.
- eLCID: The extended Logical Channel ID field identifies the logical channel instance of the corresponding MAC SDU or the type of the corresponding MAC CE as described in tables 6.2.1-1a, 6.2.1-1b, 6.2.1-2a and 6.2.1-2b for the DL-SCH and UL-SCH respectively. The size of the eLCID field is either 8 bits or 16 bits.
   NOTE 2: The extended Logical Channel ID space using two-octet eLCID and the relevant MAC subheader format is used, only when configured, on the NR backhaul links between IAB nodes or between IAB node and IAB Donor, or for multicast MTCHs.
- L: The Length field indicates the length of the corresponding MAC SDU or variable-sized MAC CE in bytes. There is one L field per MAC subheader except for subheaders corresponding to fixed-sized MAC CEs, padding, and MAC SDUs containing UL CCCH. The size of the L field is indicated by the F field;
- F: The Format field indicates the size of the Length field. There is one F field per MAC subheader except for subheaders corresponding to fixed-sized MAC CEs, padding, and MAC SDUs containing UL CCCH. The size of the F field is 1 bit. The value 0 indicates 8 bits of the Length field. The value 1 indicates 16 bits of the Length field;
- R: Reserved bit, set to 0;
- **BL: The Binding LCID field indicates whether the Logical Channel ID field indicated in the MAC subheader accompanying a MAC SDU is binding for the MAC SDU. For a given MAC SDU on UL-SCH, this field is set as indicated by upper layer for that MAC SDU.**

The MAC subheader is octet aligned.
<...>

**Table 6.2.1-X Values of BL for DL-SCH and UL-SCH**

| **Codepoint/Index** | **BL values** |
|---|---|
| **0** | **The Logical Channel ID field indicated in the MAC subheader accompanying a MAC SDU is binding for the MAC SDU.** |
| **1** | **The Logical Channel ID field indicated in the MAC subheader accompanying a MAC SDU is not binding for the MAC SDU.** |

Some example embodiments, Fig. 20, relate to a computer program PRG comprising instructions INSTR which, when executed by an apparatus (e.g., apparatus 100, 100', 200, 200' or a processor 102, 202 thereof), cause the apparatus to perform at least some aspects of the method according to the embodiments.

Some example embodiments, Fig. 20, relate to a computer-readable storage medium SM comprising the computer program PRG according to the embodiments.

Some example embodiments, Fig. 20, relate to a data carrier signal DCS carrying and/or characterizing the computer program PRG according to the embodiments.

In some example embodiments, the principle according to the embodiments enables to at least temporarily and/or at least partly attain at least one of the following advantages: Enabling parallel processing at the terminal device side, e.g., for handling high data rate traffic, increased power efficiency, e.g., by dynamically switching on/off certain RPUs or processing chains associated therewith.

In some example embodiments, the principle according to the embodiments may, e.g., be used for sixth generation (6G) mobile communication networks, e.g., supporting mobile broadband based applications.

In some example embodiments, one example use case is extended reality (XR), e.g., enabling to explore enhanced "boundless" XR, e.g., in the domain of metaverse. In some embodiments, the communication system should be able to support very high data rates, e.g., ranging from 100 Mbps to 10 Gbps or even higher peak data rate, e.g., depending on applications. In some embodiments, e.g., in addition to high data rate, another requirement may be the short E2E (end-to-end) latency (~10 ms).

The coupling of different KPIs such as high data rate and low latency puts very demanding requirements on the processing capability especially for end user equipment incl. smart phones, wearable devices, XR glasses, laptops and customer premise equipment. In order to fulfill the stringent requirements, it is of high importance that 6G system design especially considering radio layers for example User Plane (UP) protocol should be with the capability of enabling parallel processing and/or hardware-based processing to take full advantage of the fast developed SoC design. In some embodiments, the principle according to the embodiments may enable to satisfy at least some of these requirements.

## Claims

1. An apparatus (100) for a terminal device (10) comprising at least one radio processing unit (12-1, 12-2, 12-3, ...) for processing data associated with a radio communication (RC-1, RC-2) between the terminal device (10) and at least one further device (20; 30), the apparatus (100) comprising at least one processor (102), and at least one memory (104) storing instructions (106) that, when executed by the at least one processor (102), cause the apparatus (100) to: determine (300) first information (I-1) at least indicating to activate or deactivate the at least one radio processing unit , control (302) an operation of the at least one radio processing unit based on the first information (I-1).

2. The apparatus (100) according to claim 1, wherein the instructions (106), when executed by the at least one processor (102), cause the apparatus (100) to determine (310) the first information (I-1) locally.

3. The apparatus (100) according to any of the preceding claims, wherein the instructions (106), when executed by the at least one processor (102), cause the apparatus (100) to perform at least one of: a) use (315) a round-robin scheme for activating radio processing units (12-1, 12-2, 12-3, ...), and/or b) use (317) a load triggered activation scheme for activating radio processing units (12-1, 12-2, 12-3, ...).

4. The apparatus (100) according to any of the preceding claims, wherein the instructions (106), when executed by the at least one processor (102), cause the apparatus (100) to transmit (320) second information (I-2) characterizing the at least one radio processing unit (12-1, 12-2, 12-3, ...) to a network device (20).

5. The apparatus (100) according to any of the preceding claims, wherein the instructions (106), when executed by the at least one processor (102), cause the apparatus (100) to receive (322) the first information (I-1) from a or the network device (20).

6. The apparatus (100) according to claim 5, wherein the instructions (106), when executed by the at least one processor (102), cause the apparatus (100) to receive (322) the first information (I-1) from the network device (20) via at least one of: a) downlink control information, or b) a medium access control, MAC, control element, CE, MAC CE.

7. The apparatus (100) according to any of the preceding claims, wherein the instructions (106), when executed by the at least one processor (102), cause the apparatus (100) to receive (330) a resource grant (GRANT-RPU) associated with the at least one radio processing unit (12-1, 12-2, 12-3, ...).

8. The apparatus (100) according to any of the preceding claims, wherein the instructions (106), when executed by the at least one processor (102), cause the apparatus (100) to perform at least one of: a) receive (340) an indication (IND-MAC-1) in a medium access control protocol data unit (MAC-PDU) indicating a plurality of radio link control, RLC, entities associated with a medium access control service data unit (MAC-SDU) contained in the medium access control protocol data unit (MAC-PDU), or b) receive (342) an indication (IND-MAC-2) in a medium access control protocol data unit (MAC-PDU) indicating that a medium access control service data unit (MAC-SDU) contained in the medium access control protocol data unit (MAC-PDU) can be passed to any RLC entity configured for a data radio bearer derivable from a logical channel identifier, LCID, field (IE-LCID) indicated for the medium access control service data unit (MAC-SDU) in the medium access control protocol data unit (MAC-PDU), or c) receive (344) an indication (IND-MAC-3) in a medium access control protocol data unit (MAC-PDU) indicating whether a Logical Channel ID, LCID, field (IE-LCID) indicated for a medium access control service data unit (MAC-SDU) contained in the medium access control protocol data unit (MAC-PDU) is binding for the medium access control service data unit (MAC-SDU), or d) determine (346) whether a received medium access control service data unit (MAC-SDU) is an unnumbered radio link control, RLC, data protocol data unit, PDU.

9. An apparatus (100') for a terminal device (10) comprising at least one radio processing unit (12-1, 12-2, 12-3, ...) for processing data associated with a radio communication (RC-1, RC-2) between the terminal device (10) and at least one further device (20; 30), the apparatus (100') comprising means (102') for: determining (300) first information (I-1) at least indicating to activate or deactivate the at least one radio processing unit (12-1, 12-2, 12-3, ...), controlling (302) an operation of the at least one radio processing unit based on the first information (I-1).

10. A method for a terminal device (10) comprising at least one radio processing unit (12-1, 12-2, 12-3, ...) for processing data associated with a radio communication (RC-1, RC-2) between the terminal device (10) and at least one further device (20; 30), the method comprising: determining (300) first information (I-1) at least indicating to activate or deactivate the at least one radio processing unit (12-1, 12-2, 12-3, ...), controlling (302) an operation of the at least one radio processing unit based on the first information (I-1).

11. An apparatus (200) for a network device (20) for radio communication (RC-1) with a terminal device (10) that comprises at least one radio processing unit (12-1, 12-2, 12-3, ...) for processing data associated with the radio communication (RC-1; RC-2) between the terminal device (10) and at least the network device (20; 30), the apparatus (200) comprising at least one processor (202), and at least one memory (204) storing instructions (206) that, when executed by the at least one processor (202), cause the apparatus (200) to: determine (400) first information (I-1) at least indicating to activate or deactivate the at least one radio processing unit (12-2) (12-1, 12-2, 12-3, ...) of the terminal device (10), transmit (402) the first information (I-1) to the terminal device (10).

12. The apparatus (200) according to claim 11, wherein the instructions (206), when executed by the at least one processor (202), cause the apparatus (200) to perform at least one of: a) receive (410) second information (I-2) characterizing the at least one radio processing unit (12-1, 12-2, 12-3, ...) of the terminal device (10), or b) determine (412) the first information (I-1), or c) transmit (414) the first information (I-1) to the terminal device (10).

13. The apparatus (200) according to any of the claims 11 to 12, wherein the instructions (206), when executed by the at least one processor (202), cause the apparatus (200) to perform at least one of: a) transmit (420) an indication (IND-MAC-1) indicating a plurality of radio link control, RLC, entities associated with a medium access control service data unit (MAC-SDU) contained in a medium access control protocol data unit (MAC-PDU), or b) transmit (422) an indication (IND-MAC-2) in a medium access control protocol data unit (MAC-PDU) indicating that a medium access control service data unit (MAC-SDU) contained in the medium access control protocol data unit (MAC-PDU) can be passed to any RLC entity associated with the terminal device (10) configured for a data radio bearer derivable from a logical channel identifier, LCID, field (IE-LCID) indicated for the medium access control service data unit (MAC-SDU) in the medium access control protocol data unit (MAC-PDU), or c) transmit (424) an indication (IND-MAC-3) in a medium access control protocol data unit (MAC-PDU) indicating whether a Logical Channel ID, LCID, field (IE-LCID) indicated for a medium access control service data unit (MAC-SDU) contained in the medium access control protocol data unit (MAC-PDU) is binding for the medium access control service data unit (MAC-SDU), d) transmit (426) a resource grant (GRANT-RPU) associated with at least one radio processing unit (12-2) of the plurality of radio processing units (12-1, 12-2, 12-3, ...) of the terminal device (10).

14. An apparatus (200') for a network device (20) for radio communication (RC-1) with a terminal device (10) that comprises at least one radio processing unit (12-1, 12-2, 12-3, ...) for processing data associated with the radio communication (RC-1; RC-2) between the terminal device (10) and at least the network device (20; 30), the apparatus (200') comprising means for: determining (400) first information (I-1) at least indicating to activate or deactivate the at least one radio processing unit (12-1, 12-2, 12-3, ...) of the terminal device (10), transmitting (402) the first information (I-1) to the terminal device (10).

15. A method for a network device (20) for radio communication (RC-1) with a terminal device (10) that comprises at least one radio processing unit (12-1, 12-2, 12-3, ...) for processing data associated with the radio communication (RC-1; RC-2) between the terminal device (10) and at least the network device (20; 30), the method comprising: determining (400) first information (I-1) at least indicating to activate or deactivate the at least one radio processing unit (12-1, 12-2, 12-3, ...) of the terminal device (10), transmitting (402) the first information (I-1) to the terminal device (10).

16. A device (10; 20) for a wireless communication system (1000), comprising at least one apparatus (100; 100'; 200; 200') according to any of the claims 1 to 9 or 11 to 14.
